# EUROPÄISCHE PATENTANMELDUNG

(11) **EP 2 759 365 A2**
(43) Veröffentlichungstag der Anmeldung: **30.07.2014**
(21) Anmeldenummer: 14151894.4
(22) Anmeldetag: 21.01.2014
(51) Int. Cl.: B23F 21/12

(54) **Zahnradfräser**

(30) Priorität: 23.01.2013 DE 102013100681
(71) Anmelder: KENNAMETAL INC., Latrobe, PA 15650 (US)
(72) Erfinder: Vaszil-Schäffer, Wolfgang, 91413 Neustadt an der Aisch (DE)
(74) Vertreter: Prinz & Partner

(57) **Zusammenfassung**

Die Erfindung betrifft einen Schneideinsatz (30, 40), insbesondere für einen Zahnradfräser, mit einer Deckfläche (10, 12) und mehreren Seitenflächen (14), wobei zwischen der Deckfläche (10, 12) und den Seitenflächen (14) jeweils eine Schneidkante (20) gebildet ist, wobei am Übergang von einer zur anderen Schneidkante (20) eine Eckenschneide (22) vorgesehen ist, dadurch gekennzeichnet, dass die Eckenschneide (22) aus einem Mittelabschnitt (22M) mit größerem Radius und beiderseits davon jeweils einem Außenabschnitt (22A) mit kleinerem Radius gebildet ist, wobei jeder der Außenabschnitte (22A) in die jeweilige Schneidkante (20) übergeht. Die Erfindung betrifft auch einen Zahnradfräser mit einem Halter und mindestens zwei Schneideinsätzen (30, 40) dieser Art, die einander in der Bewegungsrichtung betrachtet überlappen.

## Beschreibung

Die Erfindung betrifft einen Schneideinsatz, insbesondere für einen Zahnradfräser, mit einer Deckfläche und mehreren Seitenflächen, wobei zwischen der Deckfläche und den Seitenflächen jeweils eine Schneidkante gebildet ist und wobei am Übergang von einer zur anderen Schneidkante eine Eckenschneide vorgesehen ist. Die Erfindung betrifft ferner einen Zahnradfräser mit mindestens zwei Schneideinsätzen dieser Art, die einander in der Bewegungsrichtung betrachtet überlappen.

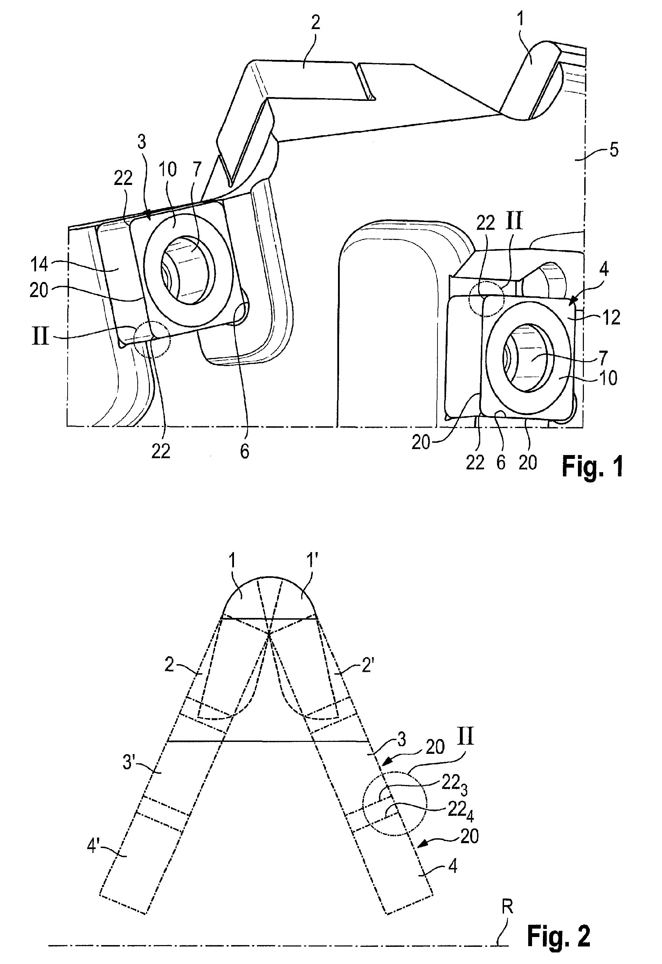

In den Figuren 1 und 2 ist schematisch ein bekannter Zahnradfräser gezeigt, der mit mehreren Schneideinsätzen bestückt ist. Diese sind in Umfangsrichtung des Zahnradfräsers gesehen voneinander beabstandet angeordnet, überlappen einander jedoch so, dass insgesamt das Negativ der zu fräsenden Zahnkontur gebildet ist. Die Mittel- und Rotationsachse ist in Figur 2 mit der Linie R angedeutet; tatsächlich wird sie einen etwas größeren Abstand von den dort gezeigten Schneideinsätzen haben.

In dem in Figur 1 gezeigten Ausschnitt des Zahnradfräsers sind insgesamt vier verschiedene Schneideinsätze gezeigt, die im unterschiedlichen Abstand von der Mittel- und Rotationsachse des Zahnradfräsers angeordnet sind. Den größten Abstand hat ein Schneideinsatz 1, der einen Teil der Kontur des Zahnfußes fräsen soll (siehe auch Figur 2). Etwas näher an der Mittelachse des Zahnradfräsers liegt ein Schneideinsatz 2, der sich an den Schneideinsatz 1 anschließt. Auf der gegenüberliegenden Seite des Zahnradfräsers sind Schneideinsätze 3 und 4 gezeigt, die wiederum näher an der Mittelachse des Zahnradfräsers liegen. In dem in Figur 1 gezeigten Ausschnitt des Zahnradfräsers nicht sichtbar sind die "Gegenstücke" zu den gezeigten Schneideinsätzen 1 bis 4. Diese sind in Figur 2 mit dem Bezugszeichen 1' bis 4' gezeigt. Es ist zu sehen, dass die Schneideinsätze, obwohl sie in Umfangsrichtung voneinander versetzt sind, in der Bewegungsrichtung des Zahnradfräsers betrachtet eine kontinuierliche Kontur definieren, wie in Figur 2 zu sehen ist. Diese kontinuierliche Kontur ist gebildet durch das Abbild der Schneidkanten der Schneideinsätze beim Durchgang durch eine Betrachtungsebene, welche die Mittel- und Rotationsachse R enthält.

Die Schneideinsätze 2 bis 4 bzw. 2' bis 4' haben einen kubischen Grundkörper mit in Draufsicht rechteckiger, insbesondere quadratischer Form. Die Oberseite und die Unterseite jedes Schneideinsatzes bilden eine Deckfläche, die einen Mittelbereich 10 aufweist, der die Befestigungsöffnung umgibt, und einen Außenbereich 12. Die beiden Deckflächen sind durch Seitenflächen 14 des Schneideinsatzes miteinander verbunden. Bei den in Figur 1 gezeigten Schneideinsätzen 2, 3, 4 sind jeweils vier identische Seitenflächen 14 vorhanden. Am Übergang jeder Seitenfläche zum Außenbereich der Deckflächen ist jeweils eine Schneidkante 20 gebildet, die als Hauptschneide wirkt. Jeder Schneideinsatz 2, 3, 4 hat somit acht Schneidkanten 20.

Zur Aufnahme der Schneideinsätze sind am Körper 5 des Zahnradfräsers jeweils Schneidplattensitze 6 vorgesehen, in denen die Schneideinsätze in an sich bekannter Weise angebracht werden. Hierzu kann insbesondere eine (nicht dargestellte) Befestigungsschraube verwendet werden, die sich durch eine Befestigungsöffnung 7 im jeweiligen Schneideinsatz erstreckt. Da die Zahnflanken von Zahnrädern üblicherweise gekrümmt sind, ist auch die von den Schneideinsätzen 1 bis 4 bzw. 1' bis 4' definierte Kontur gekrümmt. Zu diesem Zweck sind die Schneideinsätze relativ zueinander schräg angeordnet. Anders ausgedrückt sind die Mittelachsen der Befestigungsöffnungen 7 zueinander geneigt ausgerichtet.

Der Übergang von einer Schneidkante zur nächsten Schneidkante ist als Eckenschneide 22 ausgeführt, die als Nebenschneide wirkt. Die Eckenschneiden 22 sind mit einem sehr kleinen Radius ausgeführt, damit die Schneidkanten 20 eine möglichst große Länge haben. In der Darstellung von Figur 1 ist dieser Radius der Eckenschneiden 22 stark vergrößert gezeigt, um die einzelnen Elemente der Schneideinsätze besser darstellen zu können.

Für die Qualität der mit dem Zahnradfräser gefrästen Zahnkontur ist unter anderem entscheidend, dass der von einem Schneideinsatz gefräste Abschnitt der Kontur nahtlos in den von einem anderen Schneideinsatz gefrästen Abschnitt der Kontur übergeht. Betrachtet wird hier beispielsweise der in Figur 1 markierte Bereich II an den beiden Schneideinsätzen 3 und 4. Es handelt sich jeweils um eine der Eckenschneiden 22, wobei der von der Schneidkante/Hauptschneide 20 und der Eckenschneide/Nebenschneide 22 des Schneideinsatzes 3 gefräste Abschnitt der Kontur des Zahnrads fortgesetzt wird von der Eckenschneide 22 und der Schneidkante 20 des Schneideinsatzes 4. In der Bewegungsrichtung betrachtet gehen die beiden Schneidkanten 20 der Schneideinsätze 3 und 4 im Bereich der jeweiligen Eckenschneiden 22₃, 22₄ (siehe Figur 2) nahtlos ineinander über.

In der Praxis lässt sich aufgrund von Fertigungstoleranzen allerdings nicht ausschließen, dass eine leichte Fehlausrichtung vorliegt. Eine solche Fehlausrichtung führt bei den bekannten Schneideinsätzen dazu, dass die gefräste Kontur im Bereich des Übergangs von einem zum anderen Schneideinsatz eine Kante zeigt.

Die Aufgabe der Erfindung besteht darin, die Schneideinsätze und den Zahnradfräser dahingehend weiterzubilden, dass sich eine möglichst kantenfreie Kontur auch dann ergibt, wenn die Schneideinsätze im Bereich der nicht vermeidbaren Toleranzen von der optimalen Lage relativ zueinander abweichen.

Zur Lösung dieser Aufgabe ist erfindungsgemäß bei einem Schneideinsatz der eingangs genannten Art vorgesehen, dass die Eckenschneide aus einem Mittelabschnitt mit größerem Radius und beiderseits davon jeweils einem Außenabschnitt mit kleinerem Radius gebildet ist, wobei jeder der Außenabschnitte in die jeweilige Schneidkante übergeht. Auf diese Weise lassen sich zwei widersprüchliche Anforderungen miteinander kombinieren. Zum einen ergibt sich ein eckenfreien Übergang von einer Schneidkante zur benachbarten Schneidkante. Zum anderen führt dieser Übergang nicht dazu, dass ein merklicher Anteil der Länge der Hauptschneiden "geopfert" werden muss. Anders als bei einem großen Übergangsradius zwischen zwei benachbarten Hauptschneiden, mit dem eine wenigstens nahezu kantenfreie Kontur im Bereich des Übergangs von einem Schneideinsatz zum nächsten Schneideinsatz auch erzielt werden könnte, benötigt der erfindungsgemäße Übergang aufgrund der beiden Außenabschnitte, die jeweils mit einem kleinen Radius ausgebildet sind, sehr viel weniger Platz, sodass die Hauptschneide auf einer größeren Länge unverändert erhalten bleibt.

Vorzugsweise ist vorgesehen, dass der Übergang von einer Schneidkante zur benachbarten Schneidkante kontinuierlich erfolgt, also ohne Knick oder Ecke. Dies ist vorteilhaft hinsichtlich der zu fräsenden Kontur.

Gemäß einer bevorzugten Ausführungsform der Erfindung ist vorgesehen, dass die beiden Außenabschnitte denselben Krümmungsradius haben. Dies ist vorteilhaft sowohl hinsichtlich der Herstellungskosten als auch der Austauschbarkeit und Weiterverstellbarkeit der einzelnen Schneideinsätze.

Gemäß einer bevorzugten Ausführungsform liegt der Krümmungsradius der Außenabschnitte im Bereich von 0,1 bis 0,8 mm, vorzugsweise in der Größenordnung von 0,4 mm. Auf diese Weise erfolgt der Übergang von der Schneidkante zum Außenabschnitt der Eckenschneide auf sehr kleinem Raum, und es ergibt sich eine Erhöhung der Standzeiten.

Der Mittelabschnitt hat vorzugsweise einen Krümmungsradius, der mindestens doppelt so groß ist wie der kleinste Krümmungsradius der Außenabschnitte. Tatsächlich kann der Krümmungsradius des Mittelabschnittes sehr viel größer sein und insbesondere gegen unendlich gehen. Anders ausgedrückt ist der Mittelabschnitt als Gerade ausgeführt.

Vorzugsweise weist die Deckfläche einen Mittelbereich auf, der eine Befestigungsöffnung umgibt, und einen Außenbereich, der vom Mittelbereich zu den Schneidkanten hin abfällt. Dies führt zu einer bogenförmig gekrümmten Schneidkante am Schnitt mit den Seitenflächen, wodurch automatisch eine gekrümmte Kontur gefräst werden kann.

Der Außenbereich kann insbesondere konisch abfallen. Dies ermöglicht, den Außenbereich der Deckfläche mit einem kontinuierlichen Schleifvorgang herzustellen.

Zur Lösung der oben genannten Aufgabe ist erfindungsgemäß auch ein Zahnradfräser mit einem Grundkörper und mindestens zwei Schneideinsätzen der vorstehend genannten Art vorgesehen, wobei die Schneideinsätze einander in der Bewegungsrichtung betrachtet überlappen. Hinsichtlich der sich ergebenden Vorteile wird auf die obigen Erläuterungen verwiesen.

Im Hinblick auf die zu fräsende Kontur kann vorgesehen sein, dass die Mittelachsen der Befestigungsöffnungen der Schneideinsätze zueinander geneigt sind.

Die Erfindung wird nachfolgend anhand verschiedener Ausführungsformen beschrieben, die in den beigefügten Zeichnungen dargestellt sind. In diesen zeigen:
- Figur 1 in einer perspektivischen Ansicht einen Ausschnitt eines Zahnradfräsers nach dem Stand der Technik;
- Figur 2 in einer schematischen Ansicht die sich mit den verschiedenen Schneideinsätzen des Zahnradfräsers von Figur 1 ergebende Kontur;
- Figur 3 in einer perspektivischen Ansicht einen erfindungsgemäßen Schneideinsatz;
- Figur 4 in vergrößertem Maßstab den Übergang zwischen zwei benachbarten Schneidkanten beim Schneideinsatz von Figur 3;
- Figur 5 in stark vergrößertem Maßstab den sich ergebenden Übergang zwischen zwei aufeinanderfolgenden Schneideinsätzen in dem in Figur 2 mit II bezeichneten Bereich;
- Figur 6 in einer Seitenansicht einen erfindungsgemäßen Schneideinsatz gemäß einer zweiten Ausführungsform;
- Figur 7 den Schneideinsatz von Figur 6 in einer zweiten Seitenansicht;
- Figur 8 in vergrößertem Maßstab den Ausschnitt VIII von Figur 6;
- Figur 9 in vergrößertem Maßstab den Ausschnitt IX von Figur 6;
- Figur 10 in einer Ansicht entsprechend derjenigen von Figur 5 den mit dem Schneideinsatz gemäß der zweiten Ausführungsform sich ergebenden Übergang zwischen zwei einander überlappend angeordneten Schneideinsätzen; und
- Figur 11 den sich ergebenden Übergang zwischen zwei einander überlappenden Schneideinsätzen gemäß dem Stand der Technik.

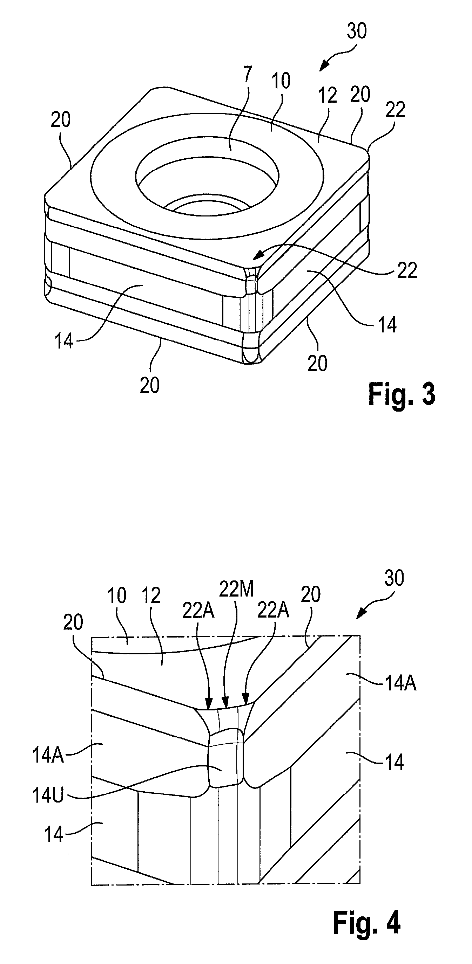

In Figur 4 ist ein Schneideinsatz 30 gezeigt, der an der Stelle eines der Schneideinsätze 2, 3, 4 von Figur 1 eingesetzt werden kann. Er hat in der Draufsicht gesehen eine allgemein quadratische Form mit zwei Deckflächen, die jeweils gebildet sind durch einen Mittelbereich 10 und einen Außenbereich 12. Der Mittelbereich 10 umgibt eine Befestigungsöffnung 7, durch die hindurch sich eine Befestigungsschraube oder ein anderes Befestigungsmittel erstrecken kann. Zwischen den beiden Deckflächen 10, 12 erstrecken sich insgesamt vier Seitenflächen 14. Am Übergang der Seitenflächen 14 zu den Deckflächen 10, 12 ist jeweils eine Schneidkante 20 gebildet, die als Hauptschneide wirkt. Der Schneideinsatz weist also insgesamt acht Schneidkanten 20 auf.

Jede der Schneidkanten 20 ist leicht bogenförmig gekrümmt, wenn sie in einer Seitenansicht auf die entsprechende Seitenfläche 14 betrachtet wird. Dies ist darauf zurückzuführen, dass der Außenbereich 12 jeder Deckfläche eine leicht konische oder kegelförmige Gestalt hat, wobei die Mittelachse des Konus oder Kegels mit der Mittelachse der Befestigungsöffnung 7 zusammenfällt. Der Kegelwinkel liegt geringfügig unter 180°, jedoch oberhalb von 170°. Da, betrachtet in einer Draufsicht auf die Deckfläche, die Bereiche des Außenbereichs an den Ecken des Schneideinsatzes einen größeren Abstand von der Mittelachse der Befestigungsöffnung 7 und des imaginären Kegels haben als im Bereich der Mitte der Seitenflächen 14, liegt der Außenbereich 12 im Bereich der Ecken des Schneideinsatzes tiefer als in der Mitte der Seitenflächen 14. Hieraus resultiert die Krümmung der Schneidkanten 20.

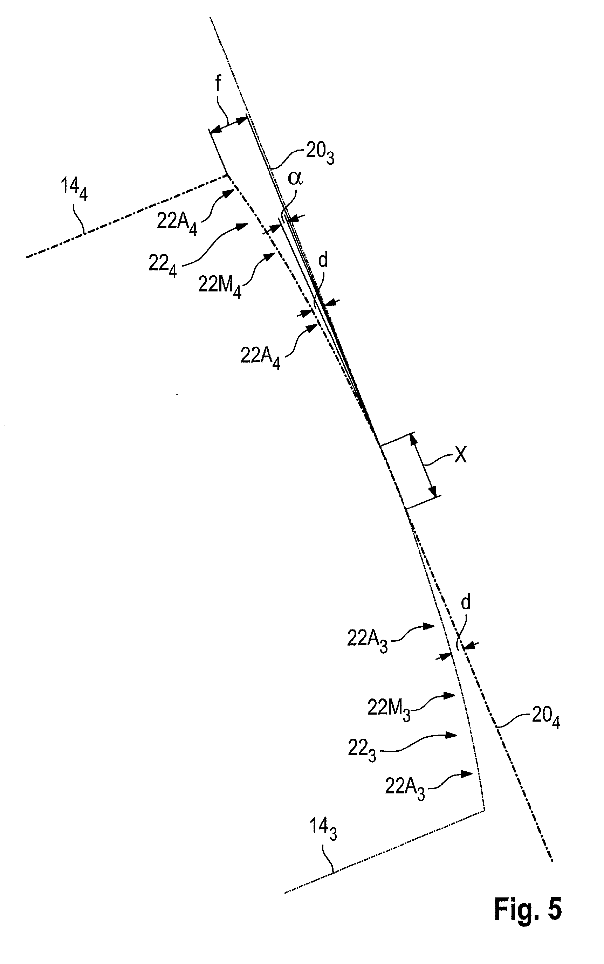

Im Bereich des Übergangs zwischen zwei aufeinander zulaufenden Schneidkanten 20 ist jeweils eine Eckenschneide 22 gebildet. Diese wirkt insbesondere als Nebenschneide. Jede Eckenschneide 22 ist hier gebildet aus einem mittig angeordneten Mittelabschnitt 22M (siehe insbesondere Figur 5) und beiderseits davon jeweils einem Außenabschnitt 22A. Die beiden Außenabschnitte 22A haben jeweils einen vergleichsweise kleinen Radius, der im Bereich von 0,1 bis 0,8 mm liegen kann und insbesondere in der Größenordnung von 0,4 mm. Der Radius des Mittelabschnitts 22M ist sehr viel größer als der Radius der Außenabschnitte 22A. Insbesondere ist vorgesehen, dass der Radius mindestens doppelt so groß ist wie der Radius der Außenabschnitte 22A. Besonders bevorzugt wird, dass der Radius unendlich groß ist, sodass der Mittelabschnitt 22M als Gerade zwischen den beiden Außenabschnitten 22A ausgeführt ist. Der Übergang von 22M zu 22A ist zumindest annähernd tangential. Der Übergang von 22A zu 20 ist vorzugsweise tangential ausgeführt und in jedem Fall mit einem Winkel von ≤20°.

Die Seitenflächen 14 können zu den Schneidkanten 20 hin als nicht ganz tangential angeschliffene Radien/Geraden-Flächen 14A ausgeführt sein, die mittels einer Übergangsfläche 14U im Bereich der Eckenschneide 22 ineinander übergehen.

In Figur 5 ist in vergrößertem Maßstab der Übergang zwischen zwei erfindungsgemäßen Schneideinsätzen am Beispiel der Schneideinsätze gezeigt, wie sie in Figur 1 als Schneideinsätze 3, 4 hintereinander angeordnet sind. Zur Verdeutlichung, welche Flächen und Kanten zu welchem Schneideinsatz gehören, werden daher die Indizes ₃ und ₄ verwendet.

Der Überlappungsbereich der beiden Schneidkanten 20₃, 20₄ ist mit X markiert. Beiderseits dieses Überlappungsbereichs fällt die Eckenschneide 22 jedes Schneideinsatzes von dem durch die Schneidkanten 20₃, 20₄ definierten Niveau nach unten ab. Betrachtet man den "oberen" Schneideinsatz, verläuft die Schneidkante 20₃ bis bin zum in Figur 5 unteren Ende des Überlappungsbereichs X. Hieran schließt sich der erste Außenabschnitt 22A₃, dann der Mittelabschnitt 22M₃ und schließlich der zweite Außenabschnitt 22A₃ an, bis die entsprechende Seitenfläche 14₃ erreicht ist. Die verschiedenen Abschnitte des "unteren" Schneideinsatzes werden durchlaufen, wenn die Kontur von unten nach oben abgefahren wird. Es ist zu sehen, dass jeder Schneideinsatz im Bereich der entsprechenden Eckenschneide 22₃, 22₄ langsam von dem von der entsprechenden Schneidkante 20₃, 20₄ definierten Niveau abfällt. Der hier maximal erreichte Freigang f bis zum Übergang in die nächste Schneidkante 20 beträgt bei dem gezeigten Beispiel in der Größenordnung von 0,11 mm.

Ein sanfter Übergang von einem Schneideinsatz zum nächsten wird dann erreicht, wenn der Übergang innerhalb des Bereichs des "ersten" Außenabschnitts 22A der Eckenschneide 22 erfolgt. Bedingt durch den kleinen Übergangswinkel von 20 zu 22A (siehe Figur 4), der ≤20° ist, ergibt sich in der Rotation eine geringe Neigungsabweichung α, die zu einem sanften Übergang zwischen den aufeinanderfolgenden Schneideinsätzen und damit zu einer kantenfreien Kontur der gefrästen Zahnflanke führt.

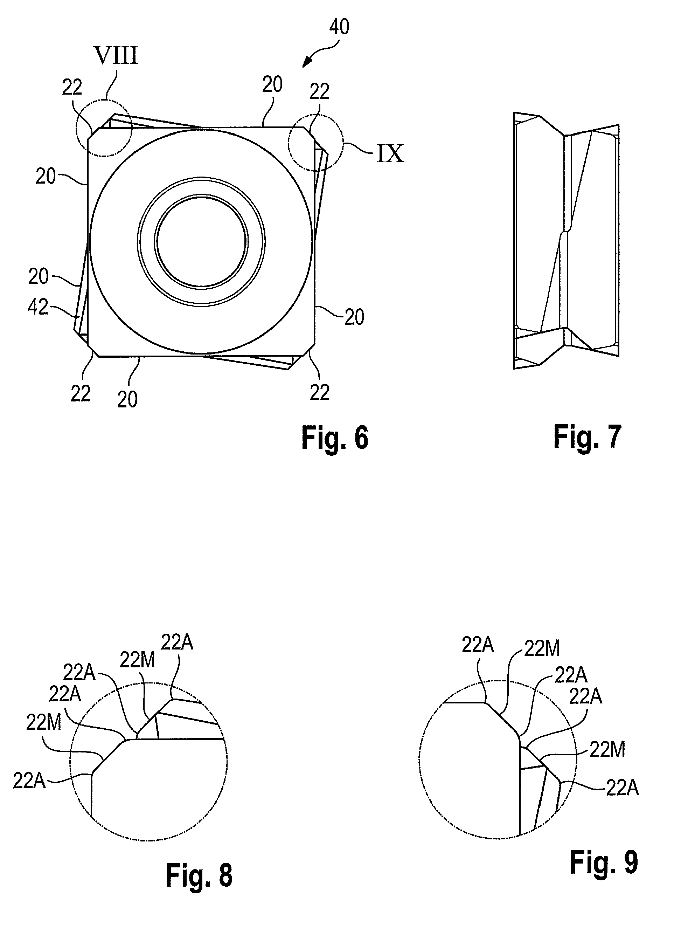

In den Figuren 6 bis 9 ist eine zweite Ausführungsform eines Schneideinsatzes 40 gezeigt. Für die von der ersten Ausführungsform bekannten Merkmale werden dieselben Bezugszeichen verwendet, und es wird insoweit auf die obigen Erläuterungen verwiesen.

Der Unterschied zwischen der ersten und der zweiten Ausführungsform besteht darin, dass der Schneideinsatz 40 der zweiten Ausführungsform aus zwei kegelstumpfförmigen Grundkörpern 42 gebildet ist, die jeweils eine quadratische Grundfläche haben. Die beiden Grundkörper sind über ihre jeweils kleinere Basisfläche miteinander verbunden, wobei sie relativ zueinander um einige Grade verdreht sind. Wie insbesondere in Figur 6 zu sehen ist, sind daher die vier Schneidkanten 20 an der vorne liegenden Deckfläche relativ zu den vier hinten liegenden Schneidkanten 20 der hinten liegenden Deckfläche verdreht. Die Grundkonstruktion eines solchen Schneideinsatzes ist aus dem Stand der Technik bekannt.

In gleicher Weise wie der Schneideinsatz der ersten Ausführungsform weist auch der Schneideinsatz der zweiten Ausführungsform am Übergang zwischen benachbarten Schneidkanten 20 jeweils eine Eckenschneide 22 auf, die jeweils aus einem Mittelabschnitt 22M und beiderseits davon angeordneten Außenabschnitten 22A gebildet sind. Auch hier haben die Außenabschnitte 22A einen sehr kleinen Radius, während der Radius des Mittelabschnitts 22M sehr groß oder auch unendlich sein kann.

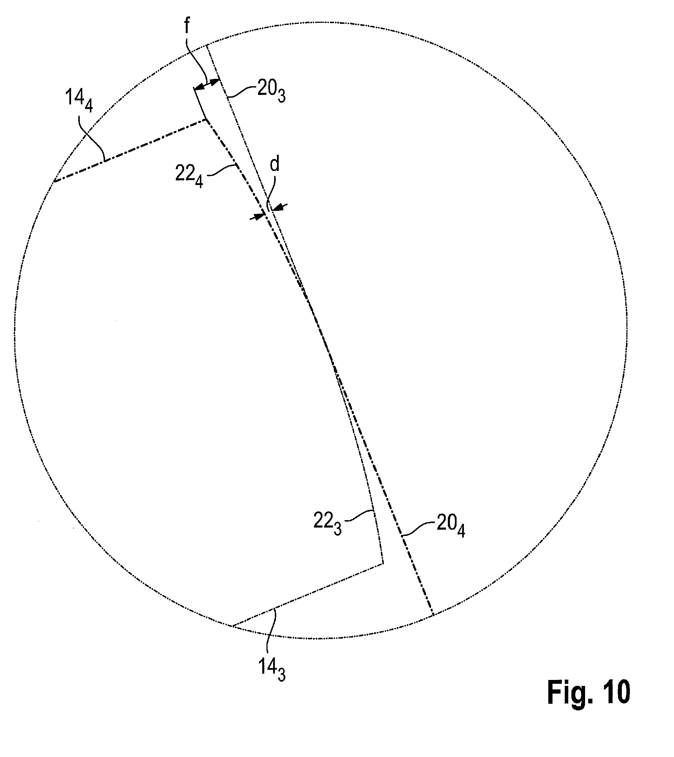

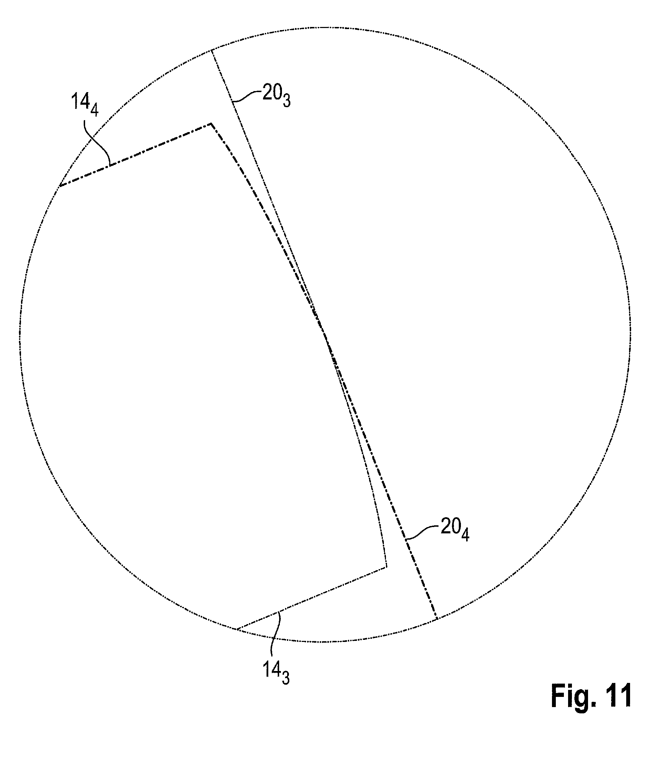

In Figur 10 ist der in eine Ebene projizierte Übergang der Schneidkanten eines Schneideinsatzes zum dahinterliegenden zweiten Schneideinsatz gezeigt. Auch hier ist zu sehen, dass ein sanfter, im Wesentlichen kanten- oder knickfreier Übergang erreicht wird, selbst wenn die Schneideinsätze leicht versetzt zueinander angeordnet werden. Im Vergleich hierzu ist in Figur 11 der Verlauf der Konturen gezeigt, wie er sich mit einem Schneideinsatz aus dem Stand der Technik ergibt, bei dem im Bereich des Übergangs von einer Schneidkante 20 zur benachbarten Schneidkante im Wesentlichen nur eine Ecke verwendet wird.

## Patentansprüche

1. Schneideinsatz (30, 40), insbesondere für einen Zahnradfräser, mit einer Deckfläche (10, 12) und mehreren Seitenflächen (14), wobei zwischen der Deckfläche (10, 12) und den Seitenflächen (14) jeweils eine Schneidkante (20) gebildet ist, wobei am Übergang von einer zur anderen Schneidkante (20) eine Eckenschneide (22) vorgesehen ist, **dadurch gekennzeichnet, dass** die Eckenschneide (22) aus einem Mittelabschnitt (22M) mit größerem Radius und beiderseits davon jeweils einem Außenabschnitt (22A) mit kleinerem Radius gebildet ist, wobei jeder der Außenabschnitte (22A) in die jeweilige Schneidkante (20) übergeht.

2. Schneideinsatz nach Anspruch 1, **dadurch gekennzeichnet, dass** der Übergang von einer Schneidkante (20) zur benachbarten Schneidkante (20) zumindest nahezu kontinuierlich erfolgt.

3. Schneideinsatz nach Anspruch 1 oder Anspruch 2, **dadurch gekennzeichnet, dass** die beiden Außenabschnitte (22A) denselben Krümmungsradius haben.

4. Schneideinsatz nach einem der vorhergehenden Ansprüche, **dadurch gekennzeichnet, dass** der Krümmungsradius der Außenabschnitte (22A) im Bereich von 0,1 bis 0,8 mm und insbesondere in der Größenordnung von 0,4 mm liegt.

5. Schneideinsatz nach einem der vorhergehenden Ansprüche, **dadurch gekennzeichnet, dass** der Mittelabschnitt (22M) einen Krümmungsradius hat, der mindestens doppelt so groß ist wie der kleinste Krümmungsradius der Außenabschnitte (22A).

6. Schneideinsatz nach einem der vorhergehenden Ansprüche, **dadurch gekennzeichnet, dass** der Mittelabschnitt (22M) eine Gerade ist.

7. Schneideinsatz nach einem der vorhergehenden Ansprüche, **dadurch gekennzeichnet, dass** die Deckfläche einen Mittelbereich (10) aufweist, der eine Befestigungsöffnung (7) umgibt, und einen Außenbereich (12), der vom Mittelbereich (10) zu den Schneidkanten (20) hin abfällt.

8. Schneideinsatz nach Anspruch 7, **dadurch gekennzeichnet, dass** der Außenbereich (12) konisch abfällt.

9. Zahnradfräser mit einem Halter und mindestens zwei Schneideinsätzen (30, 40) nach einem der vorhergehenden Ansprüche, die einander in der Bewegungsrichtung betrachtet überlappen.

10. Zahnradfräser nach Anspruch 9, **dadurch gekennzeichnet, dass** die Mittelachsen der Befestigungsöffnungen (7) der Schneideinsätze (30, 40) zueinander geneigt sind.
